(19) Europäisches Patentamt

European Patent Office

Office européen des brevets

(11) **EP 1 400 051 B1**

(12) **FASCICULE DE BREVET EUROPEEN**

(45) Date de publication et mention
de la délivrance du brevet:
**15.02.2006 Bulletin 2006/07**

(21) Numéro de dépôt: **02755080.5**

(22) Date de dépôt: **21.06.2002**

(51) Int Cl.:
***H04L 1/06*** (2006.01)

(86) Numéro de dépôt international:
**PCT/FR2002/002165**

(87) Numéro de publication internationale:
**WO 2003/001729 (03.01.2003 Gazette 2003/01)**

(54) **PROCEDE DE TRANSMISSION A INTERFERENCES REDUITES EN STTD**

ÜBERTRAGUNGSVERFAHREN MIT VERRINGERTER INTERFERENZ IN EIN STTD-SCHEMA

REDUCED-STTD-INTERFERENCE TRANSMISSION METHOD

(84) Etats contractants désignés:
**AT BE CH CY DE DK ES FI FR GB GR IE IT LI LU MC NL PT SE TR**

(30) Priorité: **21.06.2001 FR 0108178**

(43) Date de publication de la demande:
**24.03.2004 Bulletin 2004/13**

(73) Titulaire: **FRANCE TELECOM**
**75015 Paris (FR)**

(72) Inventeur: **MAYRARGUE, Sylvie**
**F-75013 Paris (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
• **PAPADIAS C B ET AL: "A space-time coding approach for systems employing four transmit antennas" 2001 IEEE INTERNATIONAL CONFERENCE ON ACOUSTICS, SPEECH, AND SIGNAL PROCESSING. PROCEEDINGS (CAT. NO.01CH37221), 2001 IEEE INTERNATIONAL CONFERENCE ON ACOUSTICS, SPEECH, AND SIGNAL PROCESSING. PROCEEDINGS, SALT LAKE CITY, UT, USA, 7-11 MAY 2001, pages 2481-2484 vol.4, XP002195791 2001, Piscataway, NJ, USA, IEEE, USA ISBN: 0-7803-7041-4**
• **HOCHWALD B ET AL: "A TRANSMITTER DIVERSITY SCHEME FOR WIDEBAND CDMA SYSTEMS BASED ON SPACE-TIME SPREADING" IEEE JOURNAL ON SELECTED AREAS IN COMMUNICATIONS, IEEE INC. NEW YORK, US, vol. 19, no. 1, janvier 2001 (2001-01), pages 48-60, XP001066106 ISSN: 0733-8716**

**Description**

Le domaine technique concerné par cette invention est celui des communications numériques, en particulier les communications sans fil. Les systèmes les plus concernés par l'invention sont les systèmes multiporteuses et les systèmes à étalement de spectre ou tout système formé de la combinaison de ces deux systèmes, y compris le MC-CDMA.

Les communications sans fil sont utilisées par exemple dans les réseaux cellulaires, en boucle locale radio et en diffusion hertzienne.

La croissance exponentielle des communications sans fil rend cruciale l'optimisation de l'utilisation du spectre hertzien, ressource rare et chère.

L'invention se propose de contribuer à cette optimisation de deux façons:

- en améliorant les bilans de liaison émetteur-récepteur, ce qui permet d'étendre la couverture radio à puissance d'émission donnée. Or, la puissance émise est généralement limitée par la technologie (linéarité, etc...) et le coût des amplificateurs, également par la consommation d'énergie (batterie, etc..)
- en augmentant la capacité des systèmes radio cellulaires, elle-même fonction de la qualité des liaisons.

La diversité d'antennes en transmission est un moyen de réaliser cette optimisation par l'exploitation des propriétés du canal de propagation reliant l'émetteur au récepteur.

Dans le domaine de la téléphonie mobile, le canal de propagation entre la base et le mobile présente un caractère aléatoire, causé par la recombinaison des trajets multiples créés par les réflexions sur les immeubles et divers obstacles présents dans l'environnement.

Il se produit ainsi des affaiblissements sélectifs en fréquence qui peuvent nuire à la qualité des communications. Deux antennes sont dites en diversité lorsque les canaux les reliant au même mobile sont statistiquement décorrélés.

La diversité peut s'obtenir soit en plaçant les antennes à une distance suffisante l'une de l'autre, soit en utilisant des antennes polarisées différemment, soit par des accès en diverses polarisation de la même antenne physique, soit par tout autre moyen.

La diversité d'antennes en réception est connue depuis très longtemps comme moyen de lutter contre ces affaiblissements. En effet, si les ondes captées, sont statistiquement décorrélées, ceci va permettre par divers moyens de traitement: sélection, combinaison, etc... d'obtenir des évanouissements moins fréquents et/ou moins profonds. On obtient donc un premier gain apporté par la présence de plusieurs récepteurs (on multiplie d'autant la puissance reçue), et un deuxième dû au traitement ci-dessus. Ce deuxième gain peut être substantiel [1], et est d'autant plus important pour des taux d'erreurs très faibles.

La diversité en émission à la station de base est plus coûteuse qu'en réception, puisqu'elle nécessite deux émetteurs, par exemple un à chacune des antennes. Les bénéfices ont la même origine : transmettre le signal par deux trajets statistiquement décorrélés. Cependant, le premier des deux gains cités ci-dessus pour la diversité en réception disparaît: il n'y a plus qu'un seul récepteur. Seul le deuxième gain subsiste.

La diversité en émission est l'application principale de l'invention.

Dans le cas d'un seul canal constitué de plusieurs trajets, on sait isoler au mieux les répétitions d'un même signal reçu par l'intermédiaire des différents trajets, bien que ces répétitions décalées arrivent de manière superposée sur le récepteur.

Pour cela, on connaît un procédé appelé réception en râteau, lorsque chaque échantillon est traité par étalement de spectre.

L'étalement de spectre a été initialement utilisé pour lutter contre les interférences et/ou pour multiplexer plusieurs communications. L'étalement de spectre permet en effet de lutter contre le brouillage extra-cellulaire, et permet le multiplexage des différents utilisateurs: ceux-ci se partagent la même bande de fréquence, et se différencient par leur séquence d'étalement, le code, comme expliqué ci-dessous.

L'étalement est donc réalisé en multipliant chaque symbole émis par une suite de chips, formant un code de longueur égale au facteur d'étalement. Le code n'est pas nécessairement le même pour chaque symbole. La bande de fréquence nécessaire pour transmettre un tel signal est augmentée d'un facteur F, d'où la dénomination " étalement de spectre ".

L'étalement consiste donc à passer du rythme symbole au rythme chip, plus rapide, le rapport entre les deux étant dénommé facteur d'étalement (F), et valant généralement $2^k$. La durée d'un symbole étant T, celle d'un chip étant $T_{chip}$, on a $T/T_{chip} = F$.

Enfin, chaque chip est mis en forme par une impulsion $p_{chip}(t)$, *en général* un filtre Racine de Nyquist.

$$p_0 = \int |p_n(t)|^2 \, dt = F * \int (p_{chip}(t))^2 \, dt$$

Le canal de transmission est habituellement considéré comme une somme de Diracs, c'est à dire comme un même signal répété et superposé à lui même plusieurs fois, avec plusieurs décalages variables, très inférieurs en pratique à la durée d'un symbole étalé.

Par la réception en râteau, on sait isoler de manière satisfaisante ces différentes répétitions superposées du signal au niveau du mobile, grâce à un procédé d'identification de la répétition de pics dans le signal superposé, et de détermination du début de chaque signal superposé.

Plus précisément, les signaux émis consistant en une suite de symboles chacun codé en une série de chips très rapides, on applique un filtre adapté au codage, à chaque fois que l'on détecte le début d'une séquence correspondant au codage d'un symbole.

Ce filtre adapté est donc appliqué plusieurs fois sur des signaux similaires correspondant à différents trajets, décalés les uns par rapport aux autres. A chaque application du filtre adapté, les séquences décalées ne font naître qu'un bruit assez faible.

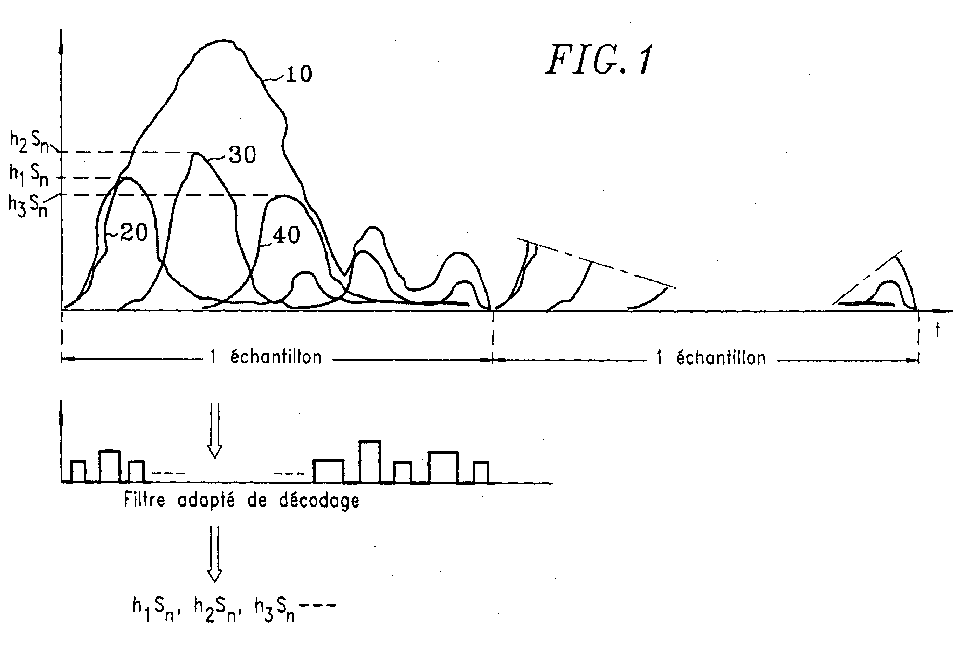

Ainsi, comme représenté sur la figure 1, la technique appelée RAKE ou récepteur en râteau, utilise le codage pour isoler, dans un signal superposé 10, des signaux 20, 30, 40 correspondant chacun à un même codage d'un même symbole, pour plusieurs trajets transmettant un symbole $S_n$.

On isole ainsi plusieurs fois un même signal correspondant au codage d'un même symbole $s_n$, pour obtenir plusieurs évaluations $h_1 S_n, h_2 S_n, h_3 S_n$... de la valeur du symbole $S_n$, à chaque fois affectée par un facteur de transmission $h_1, h_2, h_3$ ... correspondant à l'effet du trajet particulier.

On applique aux valeurs $h_1 s_n, h_2 s_n, h_3 s_n$..., obtenues un filtre adapté au canal, qui a pour fonction de délivrer une série d'évaluations de sn dont l'effet des p trajets $h_1, h_2, h_3$,... a été combiné favorablement. Ce dernier filtre adapté est estimé par le mobile selon une technique que l'on ne détaillera pas ici.

Pour chaque retard associé à l'un des trajets sélectionnés on effectue une corrélation par le conjugué du code modulant le symbole, on multiplie le résultat de la corrélation par le conjugué de l'estimée de l'amplitude du trajet, et on somme les différents résultats.

Ainsi, le récepteur en râteau est un filtrage adapté, simplifié en ceci: on fait l'approximation que le canal est formé d'un nombre fini de trajets retardés les uns par rapport aux autres (la réponse impulsionnelle du canal est donc formée d'une suite d'impulsions de Dirac). Le filtrage adapté se fait seulement en prenant en compte ces trajets.

On connaît ainsi également un procédé nommé STTD pour exploiter au mieux l'information portée par les échantillons émis par l'intermédiaire de plusieurs antennes et arrivant sur un même mobile de manière superposée.

Le concept de STTD a été présenté [3] comme s'appliquant à une transmission de symboles modulés dans un canal à réponse impulsionnelle non sélective en fréquence, (i.e. une constante multiplicative complexe), l'émetteur étant constitué de deux capteurs. La chaîne de transmission est représentée en bande de base, c'est à dire après passage dans les filtres adaptés et échantillonnage.

Un exemple typique de mise en oeuvre du STTD peut se résumer ainsi: les symboles sont groupés deux par deux. Pendant que la première antenne transmet les symboles dans l'ordre où ils arrivent (comme elle le ferait si la transmission avait lieu sur une seule antenne), la deuxième transmet les complexes conjugués des mêmes symboles, mais dans un ordre modifié, et de plus avec un changement de signe une fois sur 2: la deuxième antenne transmet -$s_{n+1}^*, s_n^*$ ( *signifie complexe conjugué) pendant que la première transmet $s_n, s_{n+1}$. De même pour les symboles suivants, $s_{n+2}, s_{n+3}$ etc ...

On montre que, si l'estimation des canaux est parfaite à la réception (les problèmes d'estimation du canal sont hors de notre propos), l'expression des symboles avant détection est semblable à celle que fournirait un récepteur en diversité de type " Maximal ratio receiver combining " [3], les signaux étant émis sur une seule antenne, reçus sur deux antennes, les canaux de propagation reliant le transmetteur unique à chaque récepteur étant les mêmes respectivement que ceux reliant chacune des antennes de transmission au récepteur unique du STTD.

Pour résumer, on considère les symboles à transmettre par couples, on les émet en inversant les symboles du couple sur une antenne en inversant les signes de symboles choisis, et en émettant le conjugué de symboles choisis, de manière à obtenir une matrice de transmission 2 X 2 qui soit orthogonale.

Ainsi on peut facilement résoudre une équation linéaire 2 X 2 qui, du fait que le mobile connaît les fonctions de transmission des différents trajets, permet d'en déduire de manière indépendante les symboles $S_n$ et $S_{n+1}$ de départ émis et superposés de l'émission simultanée par deux antennes. On tire donc l'information maximale transmise par ces deux antennes, en mettant à profit l'émission par deux antennes en termes d'efficacité de transmission.

On a déjà généralisé ce procédé à un nombre d'antennes supérieur, que la matrice de transmission orthogonale soit carrée ou non.

La matrice peut ne pas être strictement orthogonale, mais donner par multiplication avec sa transposée conjuguée une matrice qui est sensiblement diagonale, c'est à dire qui présente des valeurs faibles et/ou éparses en dehors de la diagonale, ce qui est acceptable dans certains cas.

Les symboles peuvent être groupés par des p-uplets, autres que des couples. Le nombre d'antennes n peut être différent du nombre p de symboles par groupe.

On transmet ces p-uplets par les transmissions, k pouvant être différent de p et de n, on peut obtenir une matrice sensiblement orthogonale qui n'est pas forcément carrée.

Les équations sont typiquement les suivantes dans le cas de deux antennes et de transmission par couples de symboles :

Soit $\{s_n\}$la suite de symboles à transmettre. La première antenne va transmettre $\{s_n\}$ dans cet ordre, pendant que la deuxième antenne transmet les mêmes symboles dans un ordre modifié. les symboles sont groupés 2 par 2.

Par exemple, la deuxième antenne transmet - $s_{2n+1}{}^*$, $s_{2n}{}^*$ ( *signifie complexe conjugué) pendant que la première transmet $s_{2n}$, $s_{2n+1}$. Pour alléger les notations, et comme la parité du premier indice des 2 symboles groupés n'a pas d'importance, on les notera dans la suite $s_n$ et $s_{n+1}$

On considère la représentation en bande de base du système, et les canaux dont il va s'agir regroupent les effets des filtres d'émission-réception ainsi que de la propagation. Soit h1 (respectivement h2) le canal reliant la première (resp. deuxième) antenne au mobile.
On a:

$$y_n = h_1 \, s_n \, -h_2 \, s_{n+1}{}^* \, +b_n \tag{1}$$

$$y_{n+1} = h_1 \, s_{n+1} + h_2 \, s_n{}^* + b_{n+1} \tag{2}$$

où $b_n$ désigne le bruit du récepteur au temps n.

On conjugue la deuxième équation :

$$y_{n+1}{}^* = h_1{}^* \, s_{n+1}{}^* + h_2{}^* \, s_n + b_{n+1}{}^*$$

Après passage dans les filtres adaptés aux différents canaux , on a :

$$y_n{}^1 = ( \, |h_1|^2 \, s_n \, -h_2 \, h_1{}^* \, s_{n+1}{}^* ) \, + \, h_1{}^* \, b_n \tag{3}$$

$$y_n{}^2 = (h_2 \, h_1{}^* \, s_{n+1}{}^* + |h_2|^2 \, s_n) \, + \, h_2 b_{n+1}{}^* \tag{4}$$

En additionnant (3) et (4), on fait apparaître :

$$(3)+(4) = s_n(|h_1|^2 + |h_2|^2) \, + \, h_1{}^* \, b_n + h_2 b_{n+1}{}^* \tag{5}$$

En intervertissant les rôles de $h_1$ et de $h_2$ dans (3) et après combinaison linéaire des résultats, on trouve de même :

$$s_{n+1}(|h_1|^2 + |h_2|^2) \, + \, h_1 \, b_{n+1}{}^* - h_2{}^* \, b_n \tag{6}$$

On voit donc que, à un signe près sur un des termes de bruit dans (6) - ce qui ne change pas la puissance du bruit- tout se passe comme si les données à transmettre, s, étaient émises successivement par une seule antenne, filtrées par 2 canaux h1 et h2, et reçues par un récepteur effectuant la combinaison optimale des données reçues à chaque temps symbole.

L'estimation des canaux, préalable au filtrage adapté, est ici supposée parfaite. L'estimation des canaux ne sera pas détaillée ici.

On a proposé de combiner les techniques de diversité spatiotemporel et de réception en rateau par un système AMRC en proposant un procédé de diversité en réception dans lequel un codage d'étalement de spectre identique a eu lieu sur quatre antennes à chaque transmission de symboles [6]. On a proposé de combiner les techniques de STTD et de réception en râteau rappelées ci-avant.

Ainsi, le 3GPP [4] a retenu la STTD dans l'UMTS FDD.

On a proposé d'associer ces deux procédés dans le cas où une multitude de trajets se superposent avec un codage des symboles et où l'on transmet par deux antennes en diversité.

Sur chaque canal, on sépare d'abord les ondulations correspondant aux superpositions de symboles codés simultanément afin de séparer chaque trajet correspondant à un même instant d'émission (réception en râteau).

Puis on applique un décodage sur chaque ondulation de chips (désétalement) pour obtenir des valeurs de superposition de deux symboles émis simultanément par les deux antennes. Autrement dit, on désétale chaque superposition de symboles. Puis, ces symboles étant transmis par couples selon une matrice de transmission orthogonale, on exploite l'orthogonalité de la matrice pour dé-superposer les échantillons initiaux.

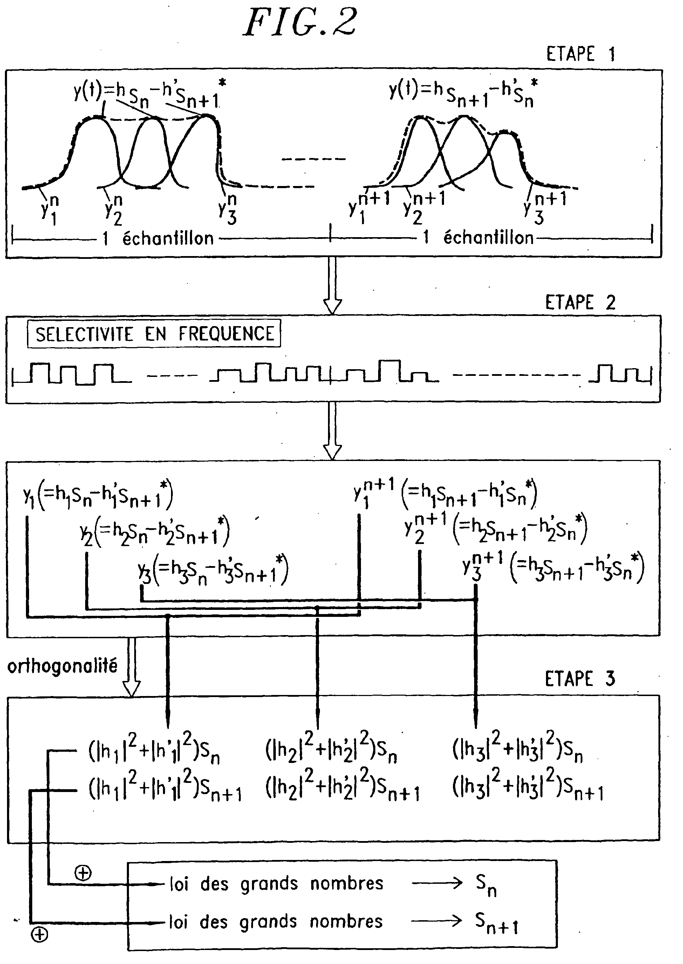

Autrement dit, on sépare les trajets par détection des pics (étape 1 sur la figure 2), puis on décode les signaux portés par les pics par trajets (désétalement) et ce deux fois de suite (étape 2 sur la figure 2), et on sépare les symboles du couple en exploitant l'orthogonalité de matrice de transmission 2X2 correspondant à ces deux instants successifs (étape 3 sur la figure 2).

On sépare donc d'abord les informations qui se trouvent répétées par la présence de différents trajets (réception en râteau) et on applique les équations issues de l'orthogonalité de la matrice de transmission pour en déduire les deux symboles initiaux(STTD)de chaque couple.

On exploite l'orthogonalité de la matrice de transmission plusieurs fois, correspondant aux différents trajets isolés. On notera que pour cela, les décalages temporels entre trajets sont préférentiellement très petits devant l'étalement d'un symbole.

Dans ce cas, la démodulation de type STTD se fait trajet par trajet, et on additionne les résultats des calculs relatifs à chaque trajet pour chacun des symboles en STTD.

Autrement dit, on généralise la technique du STTD à des canaux sélectifs en fréquence, via un concept de récepteur en râteau [1], de préférence sous l'hypothèse que la longueur de la réponse impulsionnelle du canal de propagation, soit très inférieure à la durée d'un symbole.

On présente ci-après à titre de précision les équations correspondant à une telle combinaison de procédés.

On y distingue l'effet du canal de propagation de celui du filtre de mise en forme des symboles émis. Le canal de propagation est dans les deux cas une constante multiplicative complexe. Cette présentation ne figure pas dans [3].

On note que l'étalement de symboles par les codes, caractéristique de tout système de type AMRC dont l'UMTS FDD, n'est qu'un type particulier de modulation appliqué à des symboles, dans lequel le code appliqué au symbole transmis joue le rôle du filtre de mise en forme. Ces équations s'appliquent donc à ce type de transmission, où toutefois un seul code est émis à la fois.

On note $h_1$ (respectivement $h_2$) le canal de propagation reliant la première (resp. deuxième) antenne au mobile. Ce sont des constantes complexes. Soit $p_n(t)$ (resp. $p_{n+1}(t)$) le filtre de mise en forme du nème (resp. n+1eme) symbole, émis sur l'intervalle $nT \leq t < (n+1)T$ (resp. $(n+1)T \leq t < (n+2)T$) où T désigne la durée d'un symbole. On supposera que $p_n$ et $p_{n+1}$ ont un support temporel approximativementlimité à [0, T]. Soit y(t) le signal reçu au mobile. On a:

$$y(t) = (h_1 s_n - h_2 s_{n+1}^*) p_n(t-nT) + b(t) \quad nT \leq t < (n+1)T$$

$$(1bis)$$

$$y(t) = (h_1 s_{n+1} + h_2 s_n^*) p_{n+1}(t-(n+1)T) + b(t) \quad (n+1)T \leq t < (n+2)T$$

$$(2bis)$$

b(t) désigne le bruit du récepteur au temps t.

Après passage dans les filtres adaptés aux différents canaux et échantillonnage au rythme symbole, on a :

$$y_n^1 = \int_{[nT, \; (n+1)T]} y(t) \; h_1^* \; p_n \; (t-nT)^* \; dt = (|h_1|^2 \; s_n \; -h_2 \; h_1^* \; s_{n+1}^*) \; p_0 \; +b_n^1 \quad \text{(3bis)}$$

$$y_n^2 = \int_{[(n+1)T, \; (n+2)T]} y(t) \; h_2^* \; p_{n+1} \; (t-(n+1)T)^* \; dt = (h_2^* \; h_1 \; s_{n+1} + |h_2|^2 \; s_n^*) \; p_0 \; +b_{n+1}^2$$

où

$$p_0 = \int |p_n \; (t)|^2 \; dt = \int |p_{n+1} \; (t)|^2 \; dt$$

On conjugue la deuxième équation:

$$y_n^{2*} = (h_2 \; h_1^* \; s_{n+1}^* + |h_2|^2 \; s_n) \; p_0 \; +b_{n+1}^{2*} \quad \text{(4bis)}$$

En additionnant (3) et (4), on fait apparaître :

$$(3) + (4) = s_n (|h_1|^2 + |h_2|^2) \; p_0 + b_n^1 + b_{n+1}^{2*} \quad \text{(5bis)}$$

En intervertissant les rôles de $h_1$ et de $h_2$ dans (3) et après combinaison linéaire des résultats, on trouve de même :

$$s_{n+1} (|h_1|^2 + |h_2|^2) \; p_0 + \text{bruit} \quad \text{(6bis)}$$

L'estimation des canaux, préalable au filtrage adapté, est supposée parfaite car les problèmes d'estimation imparfaite sont hors sujet.

On voit que le calcul ci-dessus englobe le cas où $p_n(t)$ désigne un code d'étalement mis en forme par l'impulsion chip dans un système AMRC.

Toutefois il apparaît que lorsque l'on combine la réception en râteau avec la technique STTD, des interférence gênantes apparaissent.

(On sait d'ores et déjà que dans un système à codes orthogonaux la sélectivité du canal entraîne une rupture de l'orthogonalité des codes.)

La sélectivité cause notamment de l'interférence entre les symboles émis simultanément.

Si deux symboles, notamment consécutifs, sont en STTD, on montre ci-après que de l'interférence supplémentaire apparaît, causée par le deuxième symbole en STTD ainsi que par tous ceux multiplexés par les codes émis pendant ce deuxième temps symbole.

Le but de l'invention est donc principalement de réduire cette interférence intersymbole. En annulant l'interférence causée par les termes émis pendant la durée symbole du deuxième symbole en STTD, interférence qui apparaît lorsque le canal est sélectif en fréquence.

Le résultat est une réduction d'environ 2/3 du niveau d'interférence intersymbole, à complexité du recepteur égale.

L'invention s'applique au STTD, que l'étalement de spectre soit réalisé au moyen de codes orthogonaux entre eux ou pas, et ne se limite pas, dans son objet principal, au cas 2 X 2.

Dans ce but, l'invention propose un procédé de transmission dans lequel :

- on transmet avec n antennes, n supérieur ou égal à 2, des symboles regroupés en p-uplets ($S_1$, ..., $S_p$), en réalisant, pour chaque p-uplet, k fois une émission simultanée de n symboles, les n symboles étant à chaque fois constitués par des valeurs parmi $S_1$....., $S_p$ qui sont dans un ordre modifié, affectées de poids choisis sélectivement parmi -1, 0 et 1, et sélectivement conjuguées, de sorte que l'on transmet k superpositions linéaires de n symboles, de manière à constituer une matrice de transmission de dimensions k x p qui est orthogonale ;
- les n antennes émettent en outre chaque symbole avec un codage d'étalement de spectre, les codages étant les mêmes sur les n antennes à chaque transmission considérée parmi les k transmissions ;
- la transmission étant effectuée sur un canal qui constitue une somme de diracs, de sorte que chaque superposition de symboles est répétée plusieurs fois à la réception ;

procédé dans lequel en outre :

- on extrait à l'aide de désétalements à la réception plusieurs fois chaque superposition de n symboles après séparation par râteau AMRC des ondulations correspondant aux k superpositions de n symboles transmises ;
- on fait ces plusieurs extractions par désétalements pour chacune des k superpositions transmises de sorte que l'on obtient plusieurs estimations de k-uplets, chaque k-uplet formant un résultat de la matrice de transmission k x p ;
- on exploite l'orthogonalité de la matrice k x p plusieurs fois correspondant à chacune des plusieurs extractions de k-uplet, de sorte que l'on obtient plusieurs fois une estimation du p-uplet ($S_1$, ....., $S_p$) et donc de chaque symbole $S_1$,......$S_p$ ;
- et on déduit une estimation de chaque symbole $S_1$, ....., $S_p$ affinée à partir des symboles estimés plusieurs fois,

caractérisé en ce que k est un nombre pair, et que l'on code les symboles selon k codes d'étalement de spectre successifs correspondant aux k transmissions, les k codes étant constitués de k/2 paires de codes qui vérifient, dans chaque paire, la propriété selon laquelle un code de la paire est inversé en temps et conjugué par rapport à l'autre code de la paire et éventuellement multiplié par une constante complexe de module 1.

D'autres caractéristiques, buts et avantages de l'invention apparaîtront à la lecture de la description détaillée qui va suivre, faite ne référence aux figures annexées sur lesquelles :

- la figure 1 est un schéma illustratif de la technique de réception en râteau ;
- la figure 2 est un diagramme représentant les étapes successives mises en oeuvre dans une combinaison des techniques de réception en râteau, et de séparation des symboles par orthogonalité de matrice de transmission ;
- la figure 3 représente une disposition préferentielle de codage en référence à un intervalle d'émission d'un symbole de longueur maximale, selon l'invention ;
- la figure 4 représente une disposition préférentielle de codage d'embrouillage, selon l'invention.

Le mobile est dans cet exemple informé que la station de base l'emploie, de manière à effectuer les corrélations du récepteur en râteau par les codes appropriés. A ceci près, le récepteur est dans cet exemple identique à celui du STTD actuel.

Les inventeurs on pu identifier que les interférences entre symboles naissant lors de la combinaison des techniques STTD et de réception en râteau sont du type qui va être exposé ci-après.

La réponse impulsionnelle du canal reliant la première (resp. la seconde) antenne au mobile sera notée $h_1$ (t) (resp. $h_2$ (t)).

On supposera que, de manière préférentielle, les décalages entre trajets sont faibles, devant la durée d'étalement des symboles.

Et on supposera que l'étalement temporel du canal est, de manière préférentielle, faible devant la longueur d'un symbole. Cette dernière condition permet de négliger l'interférence intersymbole, et d'appliquer le récepteur en râteau (RAKE) tel que décrit dans [2].

Le récepteur en râteau n'étant qu'une version simplifiée du filtre adapté au canal de propagation convolué avec le code d'étalement du symbole à détecter, nous présentons son extension à la réception en diversité de transmission STTD en l'écrivant comme un filtre adapté car la présentation est plus simple.

Considérons d'abord le cas d'un utilisateur seul :

Soit y(t) le signal reçu au mobile. On a:

$$y(t) \approx ((~h_1~s_n~-h_2~s_{n+1}~)~*p_n~)~(t-nT)~~+b~(t)~~nT \leq t < (n+1)T$$

$$(12)$$

$$y(t) = ((h_1 \ s_{n+1} + h_2 \ s_n^*) * p_{n+1})(t - (n+1)T) + b(t) \quad (n+1)T \le t < (n+2)T$$

$$(13)$$

[0085]    * désigne la convolution et b(t) le bruit du récepteur au temps t. Pour plus de clarté, on va supposer b(t)=0, car notre propos ne concerne pas le traitement du bruit.

Il est plus pratique d'exprimer les relations ci-dessus dans le domaine des fréquences.

Soit $H_1(f)$ (resp. $H_2(f)$) la fonction de transfert du canal de propagation, f désignant la fréquence. Les transformées de Fourier des équations (12) et (13) seront calculées respectivement sur les intervalles [nT, (n+1)T] et [(n+1)T, (n+2)T]. On voit donc qu'interviennent les transformées de Fourier du codage $p_n$ (resp. $p_{n+1}$) sur l'intervalle [0,T]. Elles seront notées $C_n(f)$ (resp. $C_{n+1}(f)$).

Elles ont par hypothèse un support approximativement fini noté B. Le résultat de la transformée de Fourier de y(t) sur les deux intervalles mentionnés dépendra de n via un indice.

On a donc:

$$Y_n(f) = (H_1(f) \ s_n - s_{n+1}^* \ H_2(f)) \ C_n(f)$$

$$Y_{n+1}(f) = (H_1(f) \ s_{n+1} + s_n^* \ H_2(f)) \ C_{n+1}(f)$$

Pour faire apparaître les mêmes variables dans les deux équations, on conjugue la deuxième :

$$Y_{n+1}(f)^* = (H_1(f)^* \ s_{n+1}^* + s_n H_2(f)^*) \ C_{n+1}(f)^*$$

On obtient donc un système de deux équations à deux inconnues, que l'on peut écrire sous forme matricielle :

$$\begin{bmatrix} Y_n(f) \\ Y_{n+1}^*(f) \end{bmatrix} = \begin{bmatrix} H_1(f) \ C_n(f) & -H_2(f) C_n(f) \\ H_2^*(f) \ C_{n+1}^*(f) & H_1^*(f) \ C_{n+1}^*(f) \end{bmatrix} \begin{bmatrix} s_n \\ s_{n+1}^* \end{bmatrix}$$

$$(14)$$

Pour démoduler $s_n$ et $s_{n+1}$ *, on effectue un filtrage adapté suivi d'un échantillonnage à l'instant 0.

On suppose l'estimation des différents canaux parfaite à la réception, car les problèmes d'estimation de canal sont hors propos.

Dans le domaine fréquentiel, le filtrage adapté donne une multiplication matricielle :

$$\begin{bmatrix} H_1^*(f) \ C_n^*(f) & H_2(f) \ C_{n+1}(f) \\ -H_2^*(f) C_n^*(f) & H_1(f) \ C_{n+1}(f) \end{bmatrix} \begin{bmatrix} Y_n(f) \\ Y_{n+1}^*(f) \end{bmatrix} =$$

$$\begin{bmatrix} H_1^*(f) \ C_n^*(f) & H_2(f) \ C_{n+1}(f) \\ -H_2^*(f) C_n^*(f) & H_1(f) \ C_{n+1}(f) \end{bmatrix} \begin{bmatrix} H_1(f) \ C_n(f) & -H_2(f) C_n(f) \\ H_2^*(f) \ C_{n+1}^*(f) & H_1^*(f) \ C_{n+1}^*(f) \end{bmatrix} \begin{bmatrix} s_n \\ s_{n+1}^* \end{bmatrix}$$

L'échantillonnage à l'instant 0 se traduit dans le domaine fréquentiel par une intégrale de chaque terme du produit de matrice sur la bande de fréquences B :

La première ligne du produit de matrices au second membre donne ainsi :

$$s_n \int_B \left( |H_1(f) \, C_{n,}(f)|^2 + |H_2(f) \, C_{n+1}(f)|^2 \right) df +$$

La deuxième ligne :

$$s_{n+1}{}^* \int_B \left( |H_1(f) \, C_{n,+1}(f)|^2 + |H_2(f) \, C_n(f)|^2 \right) df +$$

$$s_n \int_B H_1(f) \, H_2{}^*(f) \left( |C_{n+1}(f)|^2 - |C_n(f)|^2 \right) df \qquad (16)$$

Le terme $I = \int_B H_1(f)^* H_2(f) \left( |C_{n+1}(f)|^2 - |C_n(f)|^2 \right) df$ génère donc une interférence gênante. Si ce terme est nul, alors le dispositif STTD se comporte comme formé d'un émetteur à UN capteur, émettant SUCCESSIVEMENT $s_n$ et $s_{n+1}{}^*$, et d'un récepteur à DEUX capteurs, et une réception optimale [5].
Le terme I est nul entre autres :
si $C_{n+1}(f) = C_n(f)$ ou encore $p_{n+1}(t) = p_n(t)$, ce qui est le cas si tous les symboles sont modulés par le même filtre de mise en forme (transmission de symboles QPSK modulés par un filtre de Nyquist par exemple),
ou si $C_{n+1}(f) = C_n{}^*(f)$
Plus généralement, si $C_{n+1}(f) = C_n{}^*(f)e^{i\varphi}$ où $\varphi$ est une constante.
A titre de rappel, si les canaux sont non sélectifs en fréquence : $H_1(f) = H_1$ et $H_2(f) = H_2$. Dans ce cas :

$$I = H_1{}^* \, H_2 \int_B \left( |C_{n+1}(f)|^2 - |C_n(f)|^2 \right) df$$

Chaque terme sous l'intégrale représente l'énergie des filtres de mise en forme aux instants n et n+1. Si ces énergies sont égales, alors I = 0. Ceci se produit par exemple en CDMA si chaque code a la même énergie, ce qui est le cas en général.
Mais, dans le cas général de canaux sélectifs en fréquence $I \neq 0$
Considérons maintenant le cas de plusieurs utilisateurs simultanés :
Prenons l'exemple à 2 utilisateurs à même facteur d'étalement du paragraphe précédent.

$$y(t) = \left( \left( h_1 \, s_n - h_2 \, s_{n+1}{}^* \right) * p_{n,\,user1} \right) (t - nT) + \left( \left( h_1 \, d_n - h_2 \, d_{n+1}{}^* \right) \right) * p_{n,\,user2}) (t - nT)$$

$$nT \le t < (n+1)T$$

$$y(t) = \left( (h_1 \, s_{n+1} + h_2 \, s_n{}^*) * p_{n+1,user1} \right) (t - (n+1)T) + \left( (h_1 \, d_{n+1} + h_2 \, d_n{}^*) \right) * p_{n+1,\,user2}) (t - (n+1)T)$$

$$(n+1)T \le t < (n+2)T$$

ce qui donne par transformation de Fourier :

$$Y_n (f) = (H_1 (f) \, s_n - s_{n+1}{}^* H_2(f)) \, C_{n, user1} (f) + (H_1 (f) \, d_n$$

$$- d_{n+1}{}^* H_2 (f)) \, C_{n, user2} (f)$$

$$Y_{n+1} (f) = (H_1 (f) \, s_{n+1} + s_n{}^* H_2 (f)) \, C_{n+1, user1}(f) +$$

$$(H_1(f) \, d_{n+1} + d_n{}^* H_2 (f)) \times C_{n+1,user2} (f)$$

A **(14)** se rajoutent les termes additionnels provenant du deuxième utilisateur, de sorte que (15)devient (**15bis**) :

$$s_n \int_B (|H_1 (f) \, C_{n, user1} (f)|^2 + |H_2 (f) \, C_{n+1, user1} (f)|^2) \, df +$$

$$d_n \int_B (|H_1 (f)|^2 \, C_{n, user2} (f) \, C_{n, user1} (f)^* + |H_2 (f)|^2 \, C_{n+1, user2} (f)^* \, C_{n+1, user1} (f)) \, df +$$

$$s_{n+1}{}^* \int_B H_1 (f)^* H_2 (f) \, (|C_{n+1, user1} (f)|^2 - |C_{n, user1} (f)|^2) \, df$$

$$- d_{n+1}{}^* \int_B H_1 (f)^* H_2 (f) \, (C_{n, user2} (f) \, C_{n, user1} (f)^* - C_{n+1, user2} (f)^* \, C_{n+1, user1} (f)) \, df$$

Dans le cas où les codes multiplexés entre eux sont orthogonaux, le premier terme en facteur de $d_n$ est dû à la classique rupture de cette orthogonalité par la sélectivité du canal. Le deuxième terme en facteur de $d_{n+1}{}^*$ comme celui en facteur de $s_{n+1}{}^*$ est non nul (hors cas particuliers tels que la fin du D.1) et donc des estimées du deuxième temps symbole viennent bruiter l'estimation de $s_n$. Les mêmes termes additionnels apparaissent dans (16) en facteur de $s_n$ et $d_n$ et bruitent l'estimation de $s_{n+1}{}^*$.

Ainsi, il apparaît de même que dans (15bis) deux termes provenant du deuxième symbole viennent perturber l'estimation de $s_n$ . Or, il existe un moyen de les faire disparaître. Si l'on a :

$$C_{n+1, userj} (f) = C_{n, userj} (f)^* \exp (j \, phi)$$

Pour tout indice n désignant le premier des deux symboles en STTD, et pour tout indice j représentant un utilisateur, et phi est une constante indépendante de n et de j, on voit que les deux termes perturbateurs disparaissent (ceux en facteur de $s_{n+1}{}^*$ et $d_{n+1}{}^*$).

On a donc alors :

$$15\text{bis}= s_n \int_B \left( |H_1(f)|^2 + |H_2(f)|^2 \right) |C_{n,\,user1}(f)|^2 df +$$

$$d_n \int_B \left( |H_1(f)|^2 + |H_2(f)|^2 \right) C_{n,\,user2}(f) \right) C_{n,\,user1}(f)^* df$$

Or, $C_{n+1,\,userj}(f) = C_{n,\,useri}(f) \exp(j\,phi)$ est réalisé si dans le domaine temporel si :

$$p_{n+1,\,userj}(t) = p_{n,\,userj}(T-t)^* .$$

Cela signifie que l'on met en oeuvre un étalement par des codes qui pour deux instants différents correspondants à deux émissions couplées par STTD, sont conjugués l'un de l'autre et inversés par rapport au temps.

Lorsque phi est différent de zéro, exp (jphi) est une constante complexe de module 1 qui se retrouve appliquée à un des deux codes des deux symboles groupés en STTD, typiquement au code inversé et conjugué.

Le principe consiste donc par exemple à renverser le sens du temps (et à conjuguer) des codes de longueur 256 à raison d'un sur deux, en renversant les codes au niveau de sorties de couples de symboles associés au STTD.

Ainsi, pour faire disparaître les termes d'interférence supplémentaires causés par le STTD, le deuxième symbole en STTD doit avoir un code obtenu à partir du code du premier symbole en inversant le sens du temps, et en le conjuguant.

Dans le cas de l'UMTS, ceci veut dire que la norme est modifiée de telle sorte que les codes OVSF soient différents pour les 2 symboles en STTD : en rajoutant un indice n pour marquer cette dépendance, on a: $C_{userj,\,n,k} = C_{userj,n+1,\,F-k+1}^*$ avec F= facteur d'étalement, n désignant le premier des deux symboles en STTD.

Il est clair qu'il importe peu que ce soit le premier ou le deuxième symbole en STTD dont le sens du temps est inversé par rapport à l'ordre habituel.

Cet avantage se retrouve également dans le cas où l'on applique la technique STTD avec une matrice de transmission k x n différente de 2 x 2. En effet, si l'on a p symboles émis par n antennes avec les conjugués, inversion de temps et de signes nécessaires pour que la matrice k x p soit orthogonale, on retrouve, en codant les symboles avec un ou plusieurs couples de codes, dans lesquels couples les deux codes sont inversés en temps et conjugués, l'élimination des interférences ci-dessus présentées.

De manière générale, on transmet un p-uplet sur k instants d'émission, avec n antennes. k est choisi pair, et, pour k/2 émissions, on utilise un ou des codes donnés, et pour les k/2 autres émissions, on utilise les conjugués et inversés temporels de ces codes.

Dans le cas où on considère plusieurs symboles de différentes longueur émis simultanément et donc des codes appliqués simultanément.

Rappelons que le signal émis par l'utilisateur 1 pour moduler le n-ème symbole a été noté par: $p_n,$ user1 $(t)$

$$0 \le t < T$$

Supposons ainsi que l'utilisateur 2 ait un facteur d'étalement différent de celui du 1. Sans perte de généralité, on va supposer que l'utilisateur 2 a un facteur d'étalement moitié de celui de 1, donc un débit symbole double. Pendant que l'utilisateur 1 émet $s_n$, puis $s_{n+1}$, l'utilisateur 2 émet 4 symboles, que l'on va noter : $d_{n,1}, d_{n,2}, d_{n+1,1}, d_{n+1,2}$ Pour l'utilisateur 2, on note:

$p_{n,1,\,user2}(t)$ $0 \le t < T/2$ pour moduler la première moitié du n-ème symbole
$p_{n,2,\,user2}(t)$ $0 \le t < T/2$ pour moduler la deuxième moitié du n-ème symbole
Le support de $p_{n,1,\,user2}$ et de $p_{n,2,\,user2}$ est [0, T/2]

Le signal reçu par le mobile s'écrit donc:

$$y(t) = ((h_1 \; s_n \; -h_2 \; s_{n+1}^{\;*} \;)*p_{\;n,\; user1})\;(t-nT)\;+((h_1 \; d_{n,1} \; -$$

$$h_2 \; d_{n,2}^{\;*} \;))*p_{\;n,\;1,\;user2}\;)\;(t-nT)\;+\;b\cdot(t)$$

$$nT \le t < nT+T/2$$

$$y(t) = ((h_1 \; s_n \; -h_2 \; s_{n+1}^{\;*} \;)*\;p_{\;n,\;user1})\;(t-nT)\;+((h_1 \; d_{\;n,2}+$$

$$h_2 \; d_{n,1}^{\;*} \;))*p_{\;n,\;2,\;user2}\;)\;(t-T/2-nT)\;+\;b\;(t)$$

$$nT \;+T/2 \le t < (n+1)T$$

$$y(t) = ((h_1 \; s_{n+1}+ \; h_2 \; s_n^{\;*} \;)*p_{\;n+1,user1})\;(t-(n+1)T)+\;((h_1$$

$$d_{n+1,1} \; -h_2 \; d_{n+1,2}^{\;*} \;))*\;p_{n+1,1,user2})\;(t-(n+1)T)\;+\;b\;(t)$$

$$(n+1)T \le t < (n+1)T \;+T/2$$

$$y(t)= ((h_1 \; s_{n+1}+ \; h_2 \; s_n^{\;*} \;)*p_{n+1,\; user1})\;(t-(n+1)T)\;+\;((h_1$$

$$d_{n+1,2}+ \; h_2 \; d_{n+1,1}^{\;*} \;)*p_{n+1,2,user2})\;(t-(n+1)T-T/2)\;+\;b\;(t)$$

$$(n+1)T \;+T/2 \le t < (n+2)T$$

Dans le domaine de Fourier, la transformée sur 10, T] de $p_{n,1,\;user2}$ (t) sera notée $C_{\;n,1,\;user2}$ (f), celle de $p_{n,2,\;user2}$ (t), $C_{\;n,2,\;user2}$ (f).
ce qui donne

$$Y_n \; (f) = (H_1 \; (f) \; s_n \; - \; s_{n+1}^{\;*} \; H_2(f))\; C_{n,\;user1} \; (f)$$

$$+ \; H_1 \; (f) \; (d_{n,1} \; C_{\;n,1,\;user2} \; (f)+ \; d_{n,2} \; C_{\;n,2,\;user2} \; (f))\; - \; H_2$$

$$(f) \; (d_{n,2} \; C_{\;n,1,\;user2}^{\;*} \; (f)- \; d_{n,1} \; C_{\;n,2,\;user2}^{\;*} \; (f))$$

$$Y_{n+1}(f) = (H_1(f) s_{n+1} + s_n^* H_2(f)) C_{n+1, user1}(f) +$$

$$H_1(f) (d_{n+1,1} C_{n+1,1, user2}(f) + d_{n+1,2} C_{n+1,2, user2}(f)) -$$

$$H_2(f) (d_{n+1,2}^* C_{n+1,1, user2}(f) - d_{n+1,1}^* C_{n+1,2, user2}(f))$$

de sorte que (15bis) devient:

$$s_n \int_B (|H_1(f) C_{n, user1}(f)|^2 + |H_2(f) C_{n+1, user1}(f)|^2) df +$$

$$\int_B (|H_1(f)|^2 (d_{n,1} C_{n,1,user2}(f) + d_{n,2} C_{n,2, user2}(f)) C_{n, user1}(f)^* - |H_2(f)|^2 (d_{n+1,2} C_{n+1,1, user2}(f)^* - d_{n+1,1} C_{n+1,2, user2}(f)^*) C_{n+1, user1}(f)) df + s_{n+1}^* \int_B H_1(f)^* H_2(f)^* (|C_{n+1, user1}(f)|^2 - |C_{n, user1}(f)|^2) df - \int_B H_1(f)^* H_2(f) (d_{n,2}^* C_{n,1, user2}(f) - d_{n,1}^* C_{n,2, user2}(f)) C_{n, user1}(f)^* - (d_{n+1,1}^* C_{n+1,1, user2}(f)^* + d_{n+1,2}^* C_{n+1,2, user2}(f)^*) C_{n+1, user1}(f)) df = s_n \int_B (|H_1(f) C_{n, user1}(f)|^2 + |H_2(f)$$

$$C_{n+1,\,user1}(f)|^2)\,df + d_{n,1}\int_B |H_1(f)|^2 C_{n,1,user2}(f)\,C_{n,\,user1}(f)^*\,df - d_{n+1,2}\int_B |H_2(f)|^2\,C_{n+1,1,\,user2}(f)^*\,C_{n+1,\,user1}(f)\,df + d_{n,2}\int_B |H_1(f)|^2 C_{n,2,\,user2}(f)\,C_{n,\,user1}(f)^*\,df - d_{n+1,1}\int_B |H_2(f)|^2 C_{n+1,2,\,user2}(f)^*\,C_{n+1,\,user1}(f)\,df + s_{n+1}^*\int_B H_1(f)^*\,H_2(f)\,(|\,C_{n+1,\,user1}(f)|^2 - |\,C_{n,\,user1}(f)|^2)\,df + d_{n+1,1}^*\int_B H_1(f)^*\,H_2(f)\,C_{n+1,1,\,user2}(f)\,C_{n+1,\,user1}(f)\,df + d_{n+1,2}^*\int_B H_1(f)^*\,H_2(f)\,C_{n+1,2,\,user2}(f)^*\,C_{n+1,\,user1}(f)\,df - d_{n,2}^*\int_B H_1(f)^*\,H_2(f)\,C_{n,1,\,user2}(f)\,C_{n,\,user1}(f)^*\,df + d_{n,1}^*\int_B H_1(f)^*\,H_2(f)\,C_{n,2,\,user2}(f))\,C_{n,\,user1}(f)^*\,df$$

On voit les termes de bruit apparaître.

Ces termes de bruit s'éliminent également dans ce cas en adoptant un codage inversé en temps et conjugué pour les symboles groupés par couples.

Il est également nécessaire dans ce cas d'appliquer le STTD non pas à 2 symboles consécutifs, mais en groupant les symboles de la façon suivante : si le facteur d'étalement est par exemple $F_{max}/2$, le 1er symbole est associé au 4eme et le 2eme au 3eme. Les 3eme et 4eme symboles ont des codes OVSF inversés, ce qui permet de conserver l'orthogonalité des codes quant orthogonalité il y a entre termes de code " à l'endroit " ou " à l'envers ".

On montre ci-dessous qu'en renversant le sens du temps et en conjuguant le 1er code (resp le 2eme) pour former le 4eme code (resp le 3eme), on annule les termes d'interférence comme précédemment.

Plus précisément, l'avantage à adopter une telle symétrie de codage se démontre mathématiquement, pour deux étalements différents, de la façon suivante :

$$y(t) = ((\,h_1\,s_n - h_2\,s_{n+1}^*\,)*p_{n,\,user1})(t-nT) + ((\,h_1\,d_{n,1} - h_2\,d_{n+1,2}^*\,))*p_{n,1,\,user2})(t-nT) + b(t) \quad nT \le t < nT+T/2$$

$$y(t) = ((\,h_1\,s_n - h_2\,s_{n+1}^*\,)*\,p_{n,\,user1})(t-nT) + ((h_1\,d_{n,2} - h_2\,d_{n+1,1}^*\,))*p_{n,2,\,user2})(t-T/2-nT) + b(t) \quad nT + T/2 \le t < (n+1)T$$

$$y(t) = ((h_1 \, s_{n+1} + h_2 \, s_n^*) * p_{n+1,user1}) \, (t-(n+1)T) + ((h_1$$

$$d_{n+1,1} + h_2 \, d_{n,2}^*)) * p_{n+1,1,user2}) \, (t-(n+1)T) + b \, (t)$$

$$(n+1)T \le t < (n+1)T + T/2$$

$$y(t) = ((h_1 \, s_{n+1} + h_2 \, s_n^*) * p_{n+1, \, user1})(t-(n+1)T) + ((h_1$$

$$d_{n+1,2} + h_2 \, d_{n,1}^*) * p_{n+1,2,user2}) \, (t-(n+1)T-T/2) + b \, (t)$$

$$(n+1)T + T/2 \le t < (n+2)T$$

ce qui donne dans le domaine de Fourier:

$$Y_n \, (f) = (H_1 \, (f) \, s_n - s_{n+1}^* \, H_2(f)) \, C_{n, \, user1} \, (f)$$

$$+ H_1 \, (f) \, (d_{n,1} \, C_{n,1, \, user2} \, (f) + d_{n,2} \, C_{n,2, \, user2} \, (f)) - H_2$$

$$(f) \, (d_{n+1,2}^* \, C_{n,1, \, user2} \, (f) + d_{n+1,1}^* \, C_{n,2, \, user2} \, (f))$$

$$Y_{n+1} \, (f) = (H_1 \, (f) \, s_{n+1} + s_n^* \, H_2 \, (f)) \, C_{n+1, \, user1}(f) + H_1(f)$$

$$(d_{n+1,1} \, C_{n+1,1, \, user2} \, (f) + d_{n+1,2} \, C_{n+1,2, \, user2} \, (f)) + H_2(f)$$

$$(d_{n,2}^* \, C_{n+1,1, \, user2} \, (f) + d_{n,1}^* \, C_{n+1,2, \, user2} \, (f))$$

de sorte que (15bis) devient:

$$s_n \int_B \left( |H_1(f) \, C_{n,\,user1}(f)|^2 + |H_2(f) \, C_{n+1,\,user1}(f)|^2 \right) df +$$

$$\int_B \left( |H_1(f)|^2 \left( d_{n,1} \, C_{n,\,1,user2}(f) + d_{n,2} \, C_{n,2,\,user2}(f) \right) C_{n,\,user1}(f)^* + |H_2(f)|^2 \left( d_{n,2} \, C_{n+1,1,\,user2}(f)^* + d_{n,1} \, C_{n+1,2,\,user2}(f)^* \right) C_{n+1,\,user1}(f) \right) df +$$

$$s_{n+1}^* \int_B H_1(f)^* H_2(f) \left( |C_{n+1,\,user1}(f)|^2 - |C_{n,\,user1}(f)|^2 \right) df$$

$$- \int_B H_1(f)^* H_2(f) (d_{n+1,2}{}^* C_{n,1,\,user2}(f) + d_{n+1,1}{}^* C_{n,2,\,user2}(f)) C_{n,\,user1}(f)^* - (d_{n+1,1}{}^* C_{n+1,1,\,user2}(f)^* + d_{n+1,2}{}^* C_{n+1,2,\,user2}(f)^*) C_{n+1,\,user1}(f)) \, df$$

$$= s_n \int_B (|H_1(f) C_{n,\,user1}(f)|^2 + |H_2(f) C_{n+1,\,user1}(f)|^2) \, df +$$

$$d_{n,1} \int_B (|H_1(f)|^2 C_{n,1,user2}(f) C_{n,\,user1}(f)^* + |H_2(f)|^2 C_{n+1,2,\,user2}(f)^* C_{n+1,\,user1}(f)) \, df +$$

$$d_{n,2} \int_B (|H_1(f)|^2 C_{n,2,\,user2}(f)) C_{n,\,user1}(f)^* + |H_2(f)|^2 C_{n+1,1,\,user2}(f)^* C_{n+1,\,user1}(f)) \, df +$$

$$s_{n+1}{}^* \int_B H_1(f)^* H_2(f) (|C_{n+1,\,user1}(f)|^2 - |C_{n,\,user1}(f)|^2) \, df$$

$$- d_{n+1,1}{}^* \int_B H_1(f)^* H_2(f) (C_{n,2,\,user2}(f)) C_{n,\,user1}(f)^* - C_{n+1,1,\,user2}(f)^* C_{n+1,\,user1}(f)) \, df$$

$$- d_{n+1,2}{}^* \int_B H_1(f)^* H_2(f) (C_{n,1,\,user2}(f) C_{n,\,user1}(f)^* - C_{n+1,2,\,user2}(f)^* C_{n+1,\,user1}(f)) \, df$$

On voit que les 3 derniers termes s'annulent si

$$P_{n+1,user1}(t) = P_{n,\,user1}(T-t)^*$$

et si

$$P_{n+1,1,user2}(t) = P_{n,2,user2}(T-t)^* \quad \text{et} \quad P_{n+1,2,user2}(t) = P_{n,1,user2}(T-t)^*$$

Plus généralement, on dispose préférentiellement les couples ou p-uplets groupés en STTD, dans des dispositions par sous-groupes, où deux sous-groupes sont placés symétriquement, en référence au centre temporel d'une séquence de deux symboles les plus longs.

Plus généralement, dans le cas de n antennes et de p-uplets à transmettre, les n-uplets transmis à k instants différents sont groupés par paires, ce qui est possible parce que k est pair, de sorte que chaque paire présente une symétrie de codage par rapport au centre temporel des deux symboles associés les plus longs.

Dans le cas de l'UMTS, où l'on requiert que les interférences soient les plus faibles possibles également dans le cas où les canaux sont des constantes par rapport à la fréquence, on constate qu'avec les dispositions préconisées précédemment, une troisième interférence s'élimine aussi dans ce cas.

La forme d'onde qui module le symbole émis par l'utilisateur i au temps symbole n, est notée ci-après par :

$$P_{n,useri}(t) = \sum_{k=1,F} c_{useri,k,n} P_{chip}(t - kT_{chip})$$

$$0 \leq t \leq T$$

$\{c_{useri,k,n}\}$ k=1, F est un code. Les valeurs des coefficients appartiennent en général à un alphabet fini complexe. On note $C_{n,useri}(t) = \sum_{k=1,F} c_{useri,k,n} \delta(t - kT_{chip})$

Dans un mode de réalisation préférentiel, les codes émis par 2 utilisateurs i et j au même instant n et avec le même facteur d'étalement F sont orthogonaux :

$$\sum_{k=1,F} c_{useri,k,n} \, c_{userj,k,n}^* = 0,$$

L'orthogonalité est notamment une exigence pour l'UMTS.

Dans des systèmes à orthogonalité classiques, les codes ont été construits de manière à respecter l'orthogonalité même si les facteurs d'étalement sont différents. Par exemple soient deux utilisateurs, l'un i avec facteur d'étalement F, l'autre j avec facteur d'étalement F/2.

On a

$$\sum_{k=1,F/2} c_{useri,k,n} \, c_{userj,k,n}^* = 0,$$

$$\sum_{k=F/2+1,F} c_{useri,k,n} \, c_{userj,k-F/2+1,n+1}^* = 0,$$

Ces codes sont par exemple dits OVSF (Orthogonal Variable Spreading Factor) [4] dans le cas de l'UMTS.

Dans l'exemple d'un code OVSF, nous nous intéressons ici à la voie descendante: chaque symbole émis est d'abord étalé par une suite de chips formant un code OVSF de longueur égale au facteur d'étalement. Le code OVSF et le facteur d'étalement sont caractéristiques d'un utilisateur donné : $c_{useri,k,n}$ ne dépend pas de n.

Les codes OVSF de même longueur sont orthogonaux entre eux. Lorsque des utilisateurs de facteur d'étalement différents F' et F sont multiplexés, les codes OVSF qui leur sont associés sont choisis de manière à respecter la propriété suivante: si $F'/F = 2^g$, alors, le code de longueur F' se compose de $2^g$ séquences de longueur F bout à bout. Dans l'art antérieur, chacune de ces séquences F est orthogonale au code OVSF de longueur F placé en même position.

Pour préserver l'orthogonalité entre codes de facteurs d'étalement différents (orthogonalité hiérarchique), on propose ci-après une série de dispositions préférentiellement adoptées ensemble.

Dans le cas d'un système où les facteurs d'étalement présentent à chaque fois un rapport $2^g$, on considère la taille maximale d'un symbole(débit le plus faible), par exemple la taille de 128 chips. Les couples de symboles, dans un signal au débit le plus faible, ont ainsi une taille de 256 chips.

Pour deux couples d'échantillons de 128 chips chacun émis simultanément et à codes orthogonaux, le premier échantillon est codé avec un code donné, et le deuxième avec le code conjugué et inversé par rapport au temps, et ce sur les deux antennes.

Ainsi, sur le premier symbole, les codes restent orthogonaux l'un à l'autre car non modifiés, et sont également orthogonaux pour le deuxième échantillon car ils sont inversés et conjugués de la même façon.

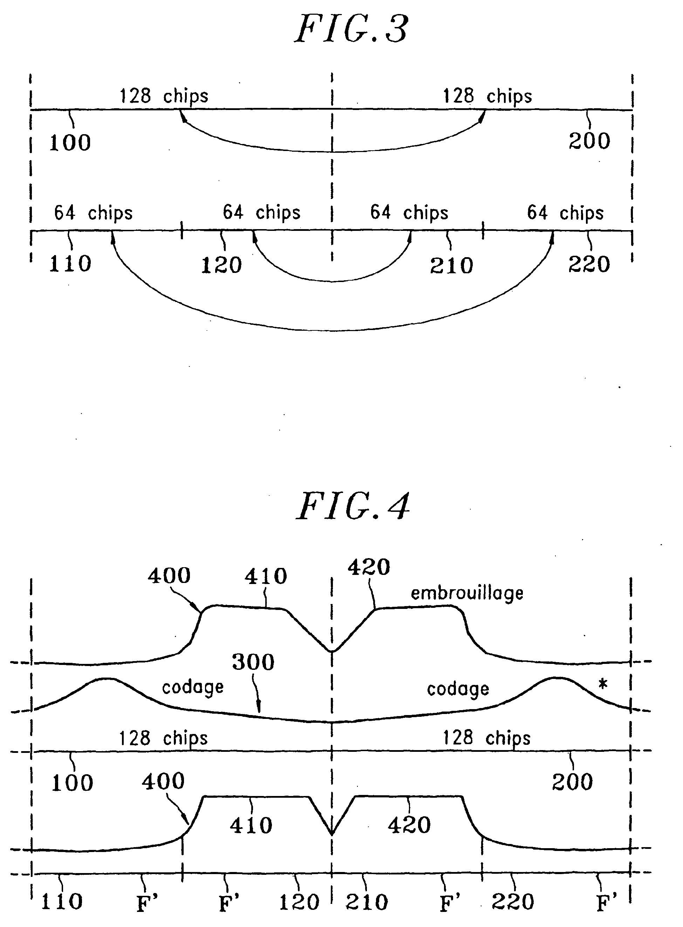

On souhaite préserver l'orthogonalité entre étalements différents, par exemple entre un couple de symboles 100 et 200 (figure 3) chacun de longueur 128 chips et une série de quatre symboles 110, 120, 210, 220 chacun de longueur 64 chips (figure 3). Supposons que l'on dispose d'un code sur le premier symbole 110 de 64 chips qui soit orthogonal à la partie de code appliquée sur les 64 premiers chips du symbole long 100 (128 chips)simultané.

Si le deuxième symbole de 64 chips a le même code que le premier mais conjugué et inversé par rapport au temps, il n'est pas forcément orthogonal à la séquence correspondante de 64 chips appliquée en deuxième position sur le symbole long 100, car le code correspondant dans ce symbole 100 n'est, lui, pas inversé.

On propose donc, dans le cas de l'orthogonalité hiérarchique, une même disposition des codes que celle préconisée ci-dessus pour le cas général des codages d'étalement différents. On place le code inversé et conjugué de 64 bits, et le symbole auquel il est appliqué, c'est à dire le symbole groupé au premier par STTD, dans une position placée en correspondance avec une partie du deuxième échantillon à 128 chips 200, de sorte que deux signaux à codes conjugués et inversés se correspondent et conservent donc la relation d'orthogonalité hiérarchique de départ.

Plus précisément, on place un code conjugué inversé court 220 face à la zone du second échantillon long 200, zone qui est l'inversée temporelle de la séquence correspondant temporellement au code de 64 bits non inversé initial 110.

La relation d'orthogonalité hierarchique systématique est ainsi conservée.

De plus, dans un système de téléphonie cellulaire typique, à chaque cellule est attribuée une séquence de chips dite d'embrouillage 400 (figure 4), très longue (beaucoup plus longue que le facteur d'étalement). Cette séquence multiplie chip à chip les symboles 110, 120, 210, 220 préalablement étalés par un code OVSF 300. Elle est complexe de module 1. On la note embr. Chaque symbole codé 100, 200, 110, 120 ; 210, 220 est multiplié par une portion de longueur F ou F' de embr. La multiplication par cette séquence n'affecte pas l'orthogonalité des codes, donc $\int_{[0, T]} p_{n, userj}(t) \, p_{n, userj}^*(t) \, dt = 0$

Dans un système à orthogonalité hiérarchique tel que celui proposé précédemment, on adopte préférentiellement certaines préconisations données ci-après, qui permettent de conserver les avantages de la réduction d'interférences.

Ainsi, la séquence d'embrouillage 400 présente préférentiellement la forme de couples de séquences 410, 420 ayant chacune la longueur maximale de symbole, 128 chips ici, et chaque couple présente une symétrie temporelle entre les deux séquences 410 et 420 du couple. Les séquences 410 et 420 du couple sont également conjugués l'une à l'autre. Les couples à symétrie et conjugués sont concommitant avec les couples de symboles longs 100, 200.

Ainsi, on associe, de la façon décrite précédemment, les symboles groupés par STTD selon des sous-groupes symétriques autour de points séparant les couples de séquences de 128 chips, et on fait de même pour l'embrouillage qui vérifie lui-même le caractère d'inversion temporelle et de conjugaison entre les couples associés en STTD.

L'embrouillage vérifiant lui-même cette symétrie, les symboles groupés en STTD sont bien codés, même en considérant l'embrouillage, par un codage général qui réduit les interférences. De plus, l'orthogonalité inter-étalements est conservée.

Ainsi, la séquence d'embrouillage 410 est, elle aussi, modifiée, pour se répéter en sens inverse, et conjuguée dans chaque deuxième symbole de longueur maximale en STTD :

$embr_{n+1, k} = embr_{n, F-k+1}^*$

ou F est la durée de symbole maximale.

Pour chaque symbole d'étalement inférieur F', on applique à ce symbole une partie d'embrouillage qui est celle appliquée simultanément à un symbole de longueur maximale 100, 200. Les symboles courts étant placés selon une symétrie par rapport aux mêmes instants de référence que l'embrouillage, l'élimination des interférences ainsi que l'orthogonalité sont également conservées pour les symboles courts.

On applique donc en pratique, à un symbole court, un tronçon d'embrouillage, inversé en temps ou non, et conjugué ou non, selon que le symbole est concommitant à un premier symbole long 410 ou à un deuxième symbole long 420.

Bien entendu, lorsque l'on passe d'un couple de symboles 410, 420 longs au couple suivant, l'embrouillage est préfentiellement différent, bien que vérifiant là encore une symétrie, et conjugué par rapport au centre du couple.

Ainsi, dans le cas de groupage en STTD par groupes de 2, c'est à dire typiquement avec deux antennes, en considérant le facteur d'étalement maximum $F_{max}$ (256 pour l'UMTS), le principe décrit consiste à renverser le sens du temps (et à conjuguer) l'embrouillage de longueur 256 à raison d'un sur 2 en renversant ces codes au niveau des centres de couples longs associés en STTD. Cette méthode se généralise facilement au cas de groupage par p-uplets où p et différent de 2.

Dans le cas de l'UMTS, La séquence d'embrouillage est modifiée de façon à se répéter en s'inversant et se conjuguant tous les $F_{max}$ chips.

REFERENCES

[1] PROAKIS Digital Communications Mc Graw-Hill

[2] N.SESHADRI, J.H.WINTERS " Two schemes for improving the performance of frequency-division duplex (FDD) transmission systems using transmitter antenna diversity " Int.J. Wireless Inform. Networks, vol. 1, n°1, pp. 49-60 Jan 1994

[3]S.M. ALAMOUTI " A simple Transmit Diversity Technique for Wireless Communications " IEEE Journal on Selected Areas in Communications Oct 1998 Vol 16 N°8 pp. 1451-1458

[4] 3GPP 3G TS 25.211 V3.2.0 (Draft 1) mars 2000
3G TS 25.213 V3.2.0 (Draft 1) mars 2000

[5] P.BALABAN, J.SALZ " Dual diversity Combining and Equalization in Digital Cellular Mobile Radio" IEEE Trans on Vehicular Technology Vol 40 n°2 May 1991

[6] PAPADIAS CB ET AL "A Space-time coding approach for systems employing four transmit antennas" 2001 IEEE International Conference on Acoustics, Speech, and Signal Processing, Proceedings, Salt Lake City, UT, USA, 7 - 11 May 2001, pp. 2481-2484 Vol 4, 2001, Piscataway, NJ, USA, IEEE, USA ISBN : 0-73803-7041-4.

**Revendications**

1.  Procédé de transmission de symbole de données dans lequel :

     - on transmet avec n antennes, n supérieur ou égal à 2, des symboles regroupés en p-uplets $(S_1, ..., S_p)$, en réalisant, pour chaque p-uplet, k fois une émission simultanée de n symboles, les n symboles étant à chaque fois constitués par des valeurs parmi $S_1, ..., S_p$ qui sont dans un ordre modifié, affectées de poids choisis sélectivement parmi -1, 0 et 1, et sélectivement conjuguées, de sorte que l'on transmet k superpositions linéaires de n symboles, de manière à constituer une matrice de transmission de dimensions k x p qui est orthogonale ;
     - les n antennes émettent en outre chaque symbole avec un codage d'étalement de spectre, les codages étant les mêmes sur les n antennes à chaque transmission considérée parmi les k transmissions ;
     - la transmission étant effectuée sur un canal qui constitue une somme de diracs, de sorte que chaque superposition de symboles est répétée plusieurs fois à la réception ;

     procédé dans lequel en outre :

     - on extrait à l'aide de désétalements à la réception plusieurs fois chaque superposition de n symboles après séparation par râteau AMRC des ondulations correspondant aux k superpositions de n symboles transmises;
     - on fait ces plusieurs extractions à l'aide de desétalements pour chacune des k superpositions transmises de sorte que l'on obtient plusieurs estimations de k-uplets, chaque k-uplet formant un résultat de la matrice de transmission k x p ;
     - on exploite l'orthogonalité de la matrice k x p plusieurs fois correspondant à chacune des plusieurs extractions de k-uplet faites à l'aide de désétalements, de sorte que l'on obtient plusieurs fois une estimation du p-uplet $(S_1, ..-.., S_p)$ ;
     - et on déduit une estimation de chaque symbole $S_1, ..., S_p$ affinée à partir des p-uplets $(S_1, ..., S_p)$estimés plusieurs fois,

     **caractérisé en ce que** k est un nombre pair, et que l'on code les symboles selon k codes d'étalement de spectre successifs correspondant aux k transmissions, les k codes étant constitués de k/2 paires de codes qui vérifient, dans chaque paire, la propriété selon laquelle un code de la paire est inversé en temps et conjugué par rapport à l'autre code de la paire, et éventuellement multiplié par une constante complexe de module 1.

2. Procédé selon la revendication 1, **caractérisé en ce que** le nombre de transmissions k par p-uplet est supérieur ou égal au nombre d'antennes n:

3. Procédé selon la revendication 1 ou la revendication 2, **caractérisé en ce que** les k transmissions sont effectuées sur k intervalles de temps (110, 120, 210, 220) ayant chacun une durée F, ces k intervalles (110, 120, 210, 220) étant répartis par paires de manière symétrique par rapport au centre d'un intervalle (100, 200) ayant une longueur $2^m F$, m étant un entier les codes appliqués à deux symboles placés symétriquement par rapport au centre de l'intervalle (100, 200) de longueur $2^m F$ étant inversés en temps et conjugués.

4. Procédé selon l'une quelconque des revendications 1 à 3, **caractérisé en ce que** l'on transmet pendant k/2 transmissions données des symboles qui sont conjugués par rapport aux symboles émis dans les k/2 autres transmissions, et **en ce que** les codes appliqués sur les k/2 dites autres transmissions sont les inversés temporels et conjugués des codes appliqués sur les k/2 dites transmissions données.

5. Procédé de transmission dans lequel on transmet de manière superposée sur les antennes plusieurs signaux selon le procédé de l'une quelconque des revendications 1 à 4, avec une longueur de symboles donnée, et on superpose aux différents codes (300) appliqués à ces différents symboles un code général (400) de longueur au moins égale à la longueur de symboles donnée, **caractérisé en ce que** le code général (400) présente la forme d'une série de couples de sous-codes successifs (410, 420), chaque couple de sous-codes (410, 420) ayant une longueur égale à celle de la longueur de symbole donnée, et les deux sous-codes (410, 420) de chaque couple étant inversés en temps et conjugués l'un par rapport à l'autre.

6. Procédé de transmission dans lequel on transmet de manière superposée sur les antennes plusieurs signaux selon le procédé de l'une quelconque des revendications 1 à 4, avec des longueurs de symboles différentes exprimées chacune sous la forme $2^q F_o$ où $F_o$ est la longueur de symbole la plus petite et q est un entier, et on superpose aux différents codes (300) appliqués à ces différentes symboles un code général (400) de longueur au moins égale à $2^{qmax} F_0$ où $2^{qmax} F_0$ est la longueur de symbole maximalé et q max est un entier **caractérisé en ce que** le code général (400) présente la forme d'une série de couples de sous-codes successifs (410, 420), chaque couple de sous-codes (410, 420) ayant une longueur de symbole $2^{qmax} x F_o$, et les deux sous-codes (410, 420) de chaque couple étant inversés en temps et conjugués l'un par rapport à l'autre.

7. Procédé selon l'une quelconque des revendications précédentes, **caractérisé en ce que** les antennes sont au nombre de n=2, on transmet les symboles par groupes de p=2 pour un nombre de transmissions k=2, de sorte que l'on obtient une matrice de transmission de dimensions 2X2.

8. Procédé dans lequel on transmet selon le procédé de 1a revendication 7, simultanément, plusieurs signaux avec des longueurs de symboles différentes égales à $2^q F_o$ où $F_0$ est la longueur de symbole la plus petite, et en ce que les couples de symboles groupés sont placés en référence à des couples de symboles de longueur maximale $2^{qmax}$, en plaçant les deux symboles de chaque couple de manière symétrique par rapport au centre temporel d'un couple concomittant de symboles de longueur maximale $2^{qmax}$.

**Claims**

1. Transmission method of data symbols in which:

- using n antennas, n being 2 or more, symbols grouped in p-tuples ($S_1$, ..., $S_p$) are transmitted by conducting, for each p-tuple, k times a simultaneous transmission of n symbols, the n symbols each time consisting of values from among $S_1$, ..., $S_p$ which in modified order are weighted selectively from among values -1, 0 and 1, and are selectively conjugated, so that k linear superimpositions of n symbols are transmitted to form a transmission matrix of size k x p which is orthogonal;
- the n antennas also transmit each symbol with spread spectrum coding, the coding being the same on the n antennas for each transmission considered among the k transmissions;
- transmission being made on a channel which forms a sum of Diracs, so that each superimposition of symbols is repeated several times on receipt;

method in which, in addition:

- using unspreading on receipt, each superimposition of n symbols is extracted several times after separation by AMRC rake of the ripples corresponding to the k transmitted superimpositions of n symbols,
- these several extractions are made by unspreading each of the k transmitted superimpositions, so that several estimations of k-tuples are obtained, each k-tuple forming a result of the transmission matrix k × p;
- the orthogonality of the matrix k × p is used several times corresponding to each of the several extractions of k-tuples made by unspreading, so that an estimation of the p-tuple $(S_1, ..., S_p)$ is obtained several times,
- and an estimation of each symbol $S_1, ..., S_p$ is inferred, refined from the p-tuples) $(S_1, ..., S_p)$ estimated several times,

**characterized in that** k is an even number and **in that** the symbols are coded in accordance with k successive spread spectrum codes corresponding to the k transmissions, the k codes consisting of k/2 pairs of codes which, in each pair, verify the property according to which one code of the pair is time-reversed and conjugated with respect to the other code of the pair, and optionally multiplied by a complex constant of module 1.

2. Method as in claim 1, **characterized in that** the number of transmissions k by p-tuple is equal to or more than the number of antennas n.

3. Method as in claim 1 or claim 2, **characterized in that** the k transmissions are made over k time intervals (110, 120, 210, 220) each having a duration F, these k intervals (110, 120, 210, 220) being distributed in pairs in symmetrical fashion with respect to the centre of an interval (100, 200) having a length $2^m F$, m being an integer, the codes applied to two symbols positioned symmetrically with respect to the centre of the interval (100, 200) of length $2^m F$ being time-reversed and conjugated.

4. Method as in any of claims 1 to 3 **characterized in that**, during k/2 given transmissions, symbols are transmitted which are conjugated with respect to the symbols transmitted in the k/2 other transmissions, and **in that** the codes applied to the said k/2 other transmissions are the temporal inverses and conjugates of the codes applied to the said k/2 given transmissions.

5. Transmission method in which several signals are transmitted in superimposed manner on the antennas with a given length of symbols according to the method in any of claims 1 to 4 and in which, on the different codes (300) applied to these different symbols, a general code (400) is superimposed having a length at least equal to the given symbol length, **characterized in that** the general code (400) is in the form of a series of successive sub-code pairs (410, 420), each pair of sub-codes (410, 420) having a length equal to the given symbol length, and the two sub-codes (410, 420) of each pair being time-reversed and conjugated with respect each other.

6. Transmission method in which several signals are transmitted in superimposed manner on the antennas according to the method in any of claims 1 to 4, with different symbol lengths each expressed in the form $2^q F_o$ in which $F_o$ is the shortest symbol length and q is an integer, and in which on the different codes (300) applied to these different symbols a general code (400) is superimposed whose length is at least equal to $2^{qmax} F_o$ in which $2^{qmax} F_o$ is the maximum symbol length and qmax is an integer, **characterized in that** the general code (400) is in the form of a series of successive sub-code pairs (410, 420) each pair of sub-codes (410, 420) having a symbol length $2^{qmax} x F_o$ and the two sub-codes (410, 420) of each pair being time-reversed and conjugated with respect to each other.

7. Method as in any of the preceding claims, **characterized in that** the number of antennas is n=2, the symbols are transmitted in groups of p=2 for a number of transmissions k=2, so that a transmission matrix is obtained of size 2x2.

8. Method in which several signals are simultaneously transmitted, according to the method in claim 7, having different symbol lengths $2^q F_o$, in which $F_o$ is the smallest symbol length, and the grouped pairs of symbols are positioned with reference to pairs of symbols of maximum length $2^{qmax}$, by placing the two symbols of each pair symmetrically with respect to the temporal centre of a concomitant pair of symbols of maximum length $2^{qmax}$.

**Patentansprüche**

1. Verfahren zur Übertragung von Datensymbolen, bei dem:

   - mit n Antennen, wobei n größer oder gleich 2 ist, zu p-Tupeln ($S_1$, ..., $S_p$) zusammengefaßte Symbole übertragen werden,

   wobei für jedes p-Tupel k-mal eine gleichzeitige Entsendung von n Symbolen durchgeführt wird,
   wobei die n Symbole jedes Mal von Werten unter $S_1$, ..., $S_p$ gebildet sind, die derart in einer modifizierten Reihenfolge stehen, einer selektiv unter -1, 0 und 1 ausgewählten Gewichtung unterworfen und selektiv konjugiert sind, daß k lineare Überlagerungen von n Symbolen übertragen werden, um eine Übertragungsmatrix mit den Dimensionen k x p zu bilden, die orthogonal ist;

   - die n Antennen ferner jedes Symbol mit einer Codierung der Spektrumsspreizung entsenden, wobei die Codierungen auf den n Antennen bei jeder betreffenden Übertragung unter den k Übertragungen dieselben sind;
   - die Übertragung auf einem Kanal durchgeführt wird, der eine Summe von Diracs darstellt, so daß jede Überlagerung von Symbolen beim Empfang mehrmals wiederholt wird;

   wobei bei dem Verfahren ferner:

   - mit Hilfe von Entspreizungen beim Empfang mehrmals jede Überlagerung von n Symbolen nach Trennung der den k Überlagerungen von n übertragenen Symbolen entsprechenden Wellungen durch AMRC-Rechen extrahiert wird;
   - diese mehreren Extraktionen mit Hilfe von Entspreizungen für jede der k übertragenen Überlagerungen durchgeführt werden, so daß mehrere Bewertungen von k-Tupeln erhalten werden, wobei jedes k-Tupel ein Ergebnis der Übertragungsmatrix k x p bildet;
   - die Orthogonalität der Matrix k x p mehrmals entsprechend jeder der Extraktionen von k-Tupeln, die mit Hilfe von Entspreizungen durchgeführt wurden, ausgewertet wird, so daß mehrmals eine Bewertung des p-Tupels ($S_1$, ..., $S_p$) erhalten wird; und
   - eine Bewertung jedes Symbols $S_1$, ..., $S_p$, verfeinert aus den p-Tupeln ($S_1$, ..., $S_p$), die mehrmals bewertet wurden, abgeleitet wird,

   **dadurch gekennzeichnet,**

   - **daß** k eine gerade Zahl ist und
   - **daß** die Symbole nach k aufeinanderfolgenden Codes der Spektrumsspreizung entsprechend den k Übertragungen codiert werden, wobei die k Codes von k/2 Codepaaren gebildet sind, die in jedem Paar die Eigenschaft kontrollieren, nach der ein Code des Paars zeitlich umgekehrt und in Bezug auf den anderen Code des Paars verbunden und eventuell mit einer komplexen Modulkonstante 1 multipliziert wird.

2. Verfahren nach Anspruch 1, **dadurch gekennzeichnet, daß** die Anzahl von Übertragungen k pro p-Tupel größer oder gleich der Anzahl von Antennen n ist.

3. Verfahren nach Anspruch 1 oder Anspruch 2, **dadurch gekennzeichnet, daß** die k Übertragungen auf k Zeitintervallen (110, 120, 210, 220) durchgeführt werden, die jeweils eine Dauer F haben, wobei diese k Intervalle (110, 120, 210, 220) paarweise symmetrisch zur Mitte eines Intervalls (100, 200) mit einer Länge $2^mF$, wobei m eine ganze Zahl ist, verteilt sind, wobei die an zwei symmetrisch zur Mitte des Intervalls (100, 200) mit der Länge $2^mF$ angeordneten Symbolen angewandten Codes zeitlich umgekehrt und verbunden werden.

4. Verfahren nach einem der Ansprüche 1 bis 3, **dadurch gekennzeichnet, daß** während k/2 gegebenen Übertragungen Symbole übertragen werden, die in Bezug auf die in den k/2 anderen Übertragungen gesendeten Symbole verbunden sind, und daß die an den k/2 so genannten anderen Übertragungen angewandten Codes die zeitlich Umgekehrten und Verbundenen der an den k/2 so genannten gegebenen Übertragungen angewandten Codes sind.

5. Übertragungsverfahren, bei dem auf überlagerte Weise auf den Antennen mehrere Signale nach dem Verfahren eines der Ansprüche 1 bis 4 mit einer gegebenen Symbollänge übertragen wird, und den verschiedenen Codes (300), die an diesen verschiedenen Symbolen angewandt werden, ein Generalcode (400) mit einer Länge mindestens gleich der gegebenen Symbollänge überlagert wird, **dadurch gekennzeichnet, daß** der Generalcode (400) die Form einer Reihe von Paaren von aufeinanderfolgenden Untercodes (410, 420) aufweist, wobei jedes Paar von Untercodes (410, 420) eine Länge gleich jener der gegebenen Symbollänge aufweist, und wobei die beiden Untercodes (410, 420) jedes Paars zeitlich umgekehrt und in Bezug aufeinander verbunden werden.

6. Übertragungsverfahren, bei dem auf überlagerte Weise auf den Antennen mehrere Signale nach dem Verfahren eines der Ansprüche 1 bis 4 mit unterschiedlichen Symbollängen übertragen wird, die jeweils in der Form $2^q F_0$ ausgedrückt werden, wobei $F_0$ die kleinste Symbollänge und q eine ganze Zahl ist, und den verschiedenen Codes (300), die an diesen verschiedenen Symbolen angewandt werden, ein Generalcode (400) mit einer Länge mindestens gleich $2^{q_{max}} F_0$ überlagert wird, wobei $2^{q_{max}} F_0$ die maximale Symbollänge und qmax eine ganze Zahl ist, **dadurch gekennzeichnet, daß** der Generalcode (400) die Form einer Reihe von Paaren von aufeinander folgenden Untercodes (410, 420) mit einer Symbollänge $2^{q_{max}} F_0$ aufweist und die beiden Untercodes (410, 420) jedes Paares zeitlich umgekehrt und in Bezug aufeinander verbunden werden.

7. Verfahren nach einem der vorhergehenden Ansprüche, **dadurch gekennzeichnet, daß** die Antennen in einer Zahl von n = 2 vorhanden sind, daß die Symbole in Gruppen von p = 2 für eine Anzahl von Übertragungen k = 2 übertragen werden, so daß eine Übertragungsmatrix mit den Dimensionen 2 x 2 erhalten wird.

8. Verfahren, bei dem nach dem Verfahren des Anspruchs 7 gleichzeitig mehrere Signale mit unterschiedlichen Symbollängen gleich $2^q F_0$ übertragen werden, wobei $F_0$ die kleinste Symbollänge ist, und bei dem die Paare von zusammengefaßten Symbolen in Bezug zu Symbolen mit maximaler Länge $2^{q_{max}}$ gesetzt werden, wobei die beiden Symbole jedes Paars symmetrisch zur zeitlichen Mitte eines begleitenden Paars von Symbolen mit der maximalen Länge $2^{q_{max}}$ angeordnet werden.

FIG.1

*Filtre adapté de décodage*

$h_1 S_n$, $h_2 S_n$, $h_3 S_n$ ---

EP 1 400 051 B1

# FIG.2

ETAPE 1

ETAPE 2

SELECTIVITE EN FREQUENCE

orthogonalité

ETAPE 3

$(|h_1|^2+|h'_1|^2)S_n$   $(|h_2|^2+|h'_2|^2)S_n$   $(|h_3|^2+|h'_3|^2)S_n$

$(|h_1|^2+|h'_1|^2)S_{n+1}$   $(|h_2|^2+|h'_2|^2)S_{n+1}$   $(|h_3|^2+|h'_3|^2)S_{n+1}$

loi des grands nombres $\longrightarrow S_n$

loi des grands nombres $\longrightarrow S_{n+1}$

## FIG.3

128 chips 128 chips

100 200

64 chips 64 chips 64 chips 64 chips

110 120 210 220

## FIG.4

400 410 420

embrouillage

300

codage codage *

128 chips 128 chips

100 400 200

410 420

110 F' F' 120 210 F' 220 F'